Europäisches Patentamt

European Patent Office

Office européen des brevets

(11) Publication number: 0 395 066
A2

# EUROPEAN PATENT APPLICATION

(21) Application number: 90107987.1

(22) Date of filing: 26.04.90

(51) Int. Cl.⁵: G21B 1/00

(30) Priority: 27.04.89 JP 108847/89
27.04.89 JP 108848/89
20.12.89 JP 330573/89

(43) Date of publication of application:
31.10.90 Bulletin 90/44

(84) Designated Contracting States:
DE FR GB

(71) Applicant: Matsushita Electric Industrial Co., Ltd.
1006, Oaza Kadoma
Kadoma-shi, Osaka-fu(JP)

(72) Inventor: Gamo, Takaharu
3-12-3, Kasugaoka, Fujiidera-shi
Osaka-fu(JP)

Inventor: Niikura, Junji
27-15, 2-chome, Fujisakamoto-machi
Hirakata-shi, Osaka-fu(JP)
Inventor: Taniguchi, Noboru
1-4-38, Sentai, Sumiyoshi-ku
Osaka-shi, Osaka-fu(JP)
Inventor: Hatoh, Kazuhito
Syofu-ryo, 3-14, Miyukihigashi-machi
Neyagawa-shi, Osaka-fu(JP)
Inventor: Adachi, Kinichi
21-24, Sakuragaoka
Takarazuka-shi, Hyogo(JP)

(74) Representative: Eisenführ, Speiser & Strasse
Martinistrasse 24
D-2800 Bremen 1(DE)

(54) Apparatus for cold nuclear fusion.

(57) An apparatus fo cold nuclear fusion and an electrode therefor are disclosed.

The apparatus comprising a container for containing hydrogen isotopes in liquid or gas state and at least one element made of a hydrogen isotope occlulding alloy such as Laves phase C14 type or C15 type alloy wherein hydrogen isotopes are occluded in the element in a high density and occluded hydrogen isotopes collide with each other.

*Fig. 1*

EP 0 395 066 A2

## Apparatus for cold nuclear fusion

## BACKGROUND OF THE INVENTION

### FIELD OF THE INVENTION

The present invention relates to an apparatus for cold nuclear fusion and electrodes desirable therefor.

### RELATED ART

In general, it is well known that the nuclear fusion reaction can be generated by colliding nuclei of hydrogen isotopes with each other directly.

However, it is difficult to collide them with each other under ordinal conditions since hydrogen isotope molecules have very high potential barriers due to coulomb forces by electrons thereof.

Conventionally, there have been made many trials for generating a high temperature plasma in a high density and confining it to cause so called thermal nuclear fusion reaction. In order to cause the thermal nuclear fusion reaction, it is theoretically considered to be necessary to realize a high temperature higher than two hundred million degrees and a product ($cm^{-3}$ sec.) of the density and the confinement time of plasma equal to or higher than $2 \times 10^{14}$.

Accordingly, extremely strong magnetic field, laser beam or electron beam is needed therefor.

## SUMMARY OF THE INVENTION

An essential object of the present invention is to provide an apparatus capable of causing nuclear fusion reactions at a low temperature.

Another object of the present invention is to provide an apparatus capable of causing nuclear fusion reactions in an electro-chemical process at a low temperature.

A further object of the present invention is to provide electrodes suitable for causing nuclear fusion reactions therein at a low tenperature.

## BRIEF DESCRIPTION OF THE DRAWINGS

These and other objects and features of the present invention will become clear from the following description taken in conjunction with the preferred embodiment thereof with reference to the accompanying drawings, in which:

Fig. 1 is a schematic perspective view of an apparatus for the cold nuclear fusion according to the first preferred embodiment of the present invention,

Fig. 2 is a graph for showing a time dependency of the amount of tritiums measured by a liquid scintillation counter in the Example 1 of the first preferred embodiment,

Fig. 3 is a schematic perspective view of an apparatus for the cold nuclear fusion according to the second preferred embodiment of the present invention,

Fig. 4 is a graph for showing a time variation of the amount of tritiums measured by a liquid scintillation counter in the Example 1 of the second preferred embodiment of the present invention,

Fig. 5 is an explanatory view for showing an apparatus for the cold nuclear fusion according to the Example 1 of the third preferred embodiment of the present invention,

Fig. 6 is a graph for showing a time dependency of the amount of neutrons measured in the Example 1,

Fig. 7 is an explanatory view for showing an apparatus employed in the Example 2 of the third preferred embodiment of the present invention, and

Fig. 8 is a graph showing a time dependency of the amount of neutrons measured in the Example 2.

2

DETAILED DESCRIPTION OF THE PREFERRED EMBODIMENT

[ First Preferred Embodiment ]

The nuclear fusion reaction is a nuclear reaction in which light nuclei such as hydrogen isotope atoms are fused into a heavier atomic nucleus in contrast of the nuclear fission reaction in which heavy uranium atoms are fissured into lighter atoms accompanying a great deal of thermal energy.

As is well known, in the nuclear fusion reaction, it becomes possible to obtain a great deal of energy triple as large as that obtained in the nuclear fission reaction. Also, the nuclear fusion reaction is considered to be an ideal clean energy source since it is supposed to be caused in the sun.

As available nuclear fusion reactions, the following reactions are considered since they are required to have a large reaction cross-section at a low energy.

[1] $D + T \rightarrow {}^4He$ (3.5 MeV) + n (14.1 MeV)

[2] $D + D \rightarrow {}^3He$ (0.82 MeV) + n (2.45 MeV)

[3] $D + D \rightarrow T$ (1.01 MeV) + n (3.02 MeV)

[4] $D + {}^3He \rightarrow {}^4He$ (3.6 MeV) + P (14.7 MeV)

The value in each bracket indicates a kinetic energy of each particle.

Among these reactions, D-D reaction is ideal since deuterium is considered to be inexhaustible from the view point of resources. The reaction cross-sections (probability) of the reactions [2] and [3] are almost equal to each other. Tritium is a radiative isotope having a half-life of 12 years which emits weak $\beta$-rays.

It is possible to produce tritiums by introducing neutrons generated in the reactions [1] and [2] into a blanket containing lithiums as follows;

[5] ${}^6Li + n + {}^4He + T + $ (4.8 MeV)

[6] ${}^7Li + n + {}^4He + T + n' + $ (-2.47 MeV)

It is possible to breed tritiums using neutrons $n'$ generated in the reaction [6].

In order to generate nuclear fusion reactions, it is necessary to realize such a high temperature and a high density of nuclei as realized in the interior of the sun. However, it becomes possible under certain conditions to control the probability of occurrence of the nuclear fusion between hydrogen isotope nuclei utilizing the tonnel effect based on the quantum dynamics and, therefore, the probability can be increased greatly.

The present invention intends to realize the above reactions [1] to [6], especially reactions [2] and [3] by satisfying such conditions needed for increasing the reaction probability greatly.

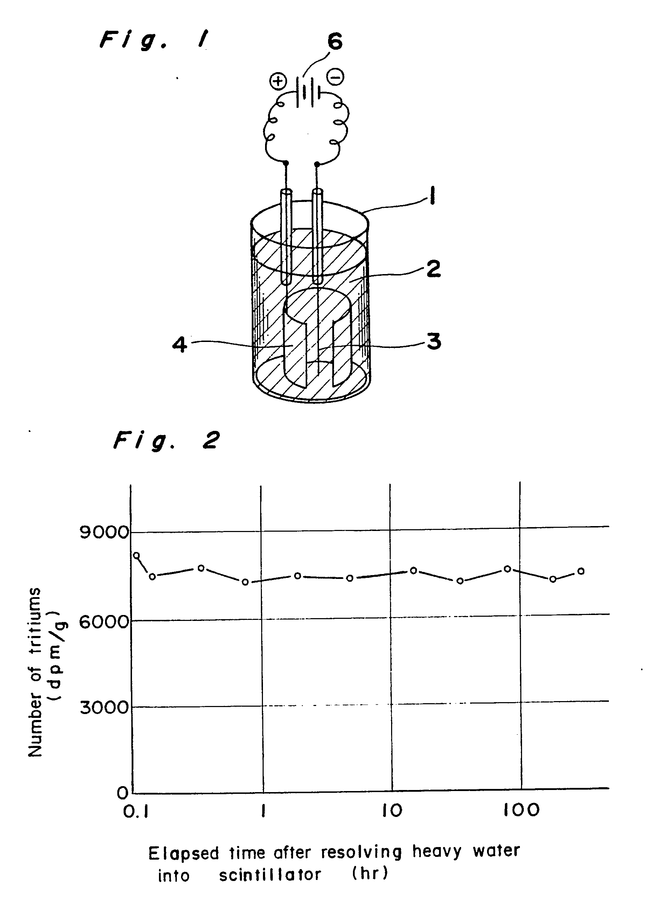

In the present preferred embodiment of the present invention as shown in Fig. 1, an apparatus for cold nuclear fusion is comprised of a container 1 in which an electrolyte 2 is filled, a cathode 3 immersed in the electrolyte 2, a annode 4 immersed so as to surround the cathode 3 and a power source 6 for supplying a current between the cathode and annode 3 and 4.

The electrolyte 2 is a compound of hydrogen isotope and oxygen such as heavy water including alkali metal ions such as $Li^+$, $K^+$ and the like.

The cathode 3 includes an alloy capable of occluding hydrogen isotopes in a high density therein as a main component and the annode 4 is a metal, metal oxide, or metal hydroxide. When a current is supplied between the cathode and annode 3 and 4, the electrolyte 2 is electrolyzed to generate hydrogen isotopes such as deuterons and the hydrogen isotopes are occluded into the cathode 3 in a high density to realize conditions for generating cold nuclear fusion reactions in the cathode 3.

An alloy suitable for the cathode 3 can be made as follows. Raw materials such as Ti, Zr, and the like are weighed so as to have a component of a desired Laves phase of C14 type and/or C15 type and are melted in an Ar arc melting furnace or a high frequency induction heating furnace containing Ar innert gas therein. A part of the alloy material thus obtained was used for analyzing the atomic composition, crystal structure, crystal lattice constants, homogeneity and the like.

The rest thereof was used for measuring occluding and releasing amounts of hydrogen isotopes in a hydrogen isotope gas while varying the pressure P, the component C and the temperature of the gas and for evaluating the electro-chemical properties of the alloy. The electrode can be made by the powder solidifying method, the powder sintering method, the machining method or the diecasting method.

Table 1 shows examples of alloys suitable for the cathode obtained from the above analysis and measurements.

Table 1

| Composition | atomic ratio of deuteron to alloy (H/M) |
| --- | --- |
| $TiZn_2$ | 1.1 |
| $TiFe_2$ | 1.05 |
| $ZrV_2$ | 1.8 |
| $ZrV_{0.4}Ni_{1.6}$ | 1.3 |
| $ZrV_{0.5}Ni_{1.5}$ | 1.4 |
| $ZrV_{0.7}Ni_{1.3}$ | 1.5 |
| $ZrMn_2$ | 1.7 |
| $ZrW_2$ | 1.0 |
| $HfAl_{1.5}Si_{0.5}$ | 1.1 |
| $HfMn_2$ | 1.2 |
| $TaCo_2$ | 1.1 |
| $Y_{0.4}Ti_{0.6}Ni_2$ | 1.05 |
| $Zr_{0.5}Ca_{0.5}Cu_2$ | 1.1 |
| $Mg_{0.6}Ti_{0.4}Zn_2$ | 1.2 |
| $LaPt_2$ | 1.5 |
| $CeNi_2$ | 1.6 |
| $PrNi_{1.5}Nb_{0.5}$ | 1.2 |
| $MmPd_2$ | 1.3 |
| $Ti_{0.6}Nb_{0.4}Co_2$ | 1.1 |

## Table 1 (Cont.)

| Composition | atomic ratio of deuteron to alloy (H/M) |
|---|---|
| $Hf_{0.7}Nd_{0.3}Al_2$ | 1.05 |
| $TiCr_2$ | 1.6 |
| $TiCo_2$ | 1.2 |
| $Ti_{0.8}Al_{0.2}Co_2$ | 1.6 |
| $CaMg_{1.5}Ni_{0.5}$ | 1.1 |
| $Zr_{0.5}Nd_{0.5}Ca_2$ | 1.15 |
| $TiAl_{1.0}Y_{1.5}$ | 1.4 |
| $TiCr_{1.2}Ta_{0.3}$ | 1.4 |
| $ZrMo_2$ | 1.7 |
| $ZrPd_{0.5}Zu_{1.0}$ | 1.3 |
| $ZrNi_{0.8}Ag_{1.0}$ | 1.2 |
| $ZrMo_{1.2}Au_{0.8}$ | 1.4 |
| $ZrSm_{0.8}Mn_{1.7}$ | 1.4 |

In Table 1, the amount of electro-chemical occlusion of the hydrogen isotope, especially deuteron is represented by a number of the occluded hydrogen isotopes per one atom of the alloy.

As the result of the analysis, alloys listed up in Table 1 were homogeneous and the major alloy phase of each alloy was the Laves phase of C14 type or C15 type. The crystal lattice constants a and c of the C14 Laves phase having a hexagonal symmetry ranged from 4.8 to 5.2 Å and from 7.9 to 8.3 Å, respectively. In the case of the C15 Laves phase having a cubic symmetry, it was confirmed that the crystal lattice constant a ranged from 6.92 to 7.70 Å. The shift of the component was hardly observed.

As is apparent from Table 1, the amounts of occlusion of the hydrogen isotope of these alloys are much larger than those of single metals such as Pb and the like. Also, it was confirmed that other properties such as reaction velocity and the like were superior relative to those of single metals.

Although a variety of composition may exist with respect to the Laves phase alloy having the C14 or C15 type crystal structure, alloys represented by a general equation $AB\alpha$ (Element A is different from element B) are especially desirable because of the homogeneous Laves phases and excellent nuclear reaction property wherein A is one or two or more elements selected among Zr, Ti, Hf, Ta, Y, Ca, Mg, La, Ce, Pr, Mm, Nb, Nd, Mo, Al and Si and B is one or two or more elements selected among Fe, V, Ni, Cr, Mn, Co, Cu, Zn, Al, Si, Nb, Mo, W, Mg, Ca, Y, Ta, Pd, Pt, Ag, Au, Cd, In, Bi, La, Ce, Pr, Nd, Th, Sm and Mm (Mm indicates a mixture of rare earth elements) and $\alpha$ ranges from 1.5 to 2.5.

In the case of the C14 Laves phase alloy having a hexagonal symmetry, alloys having the lattice constant a ranging from 4.8 to 5.2 Å and the lattice constant c ranges from 7.9 to 8.3 Å and alloys having the lattice constant a ranging from 6.92 to 7.70 in the case of the C15 Laves phase alloy having a cubic symmetry are desirable since the nuclear fusion reactions are easily promoted therein and the energy generated thereby is large.

[ Example 1 ]

Into a beaker 1 of volume 100 ml, heavy water 2 of purity 99.5 % in which about 0.1 N lithium chloride and about 0.1 N nickel chloride were resolved was poured and a wire-like $TiZn_2$ cathode 3 of a diameter 2.0 mm was inserted therein at the center of the beaker 1. A strip-like Pt annode 4 of a thickness 0.3 mm was arranged therein so as to surround the cathode 3. The heavy water was electrolyzed for 200 hours by applying a direct current voltage of 20 to 30 V with a current of 10 to 500 mA by a direct current source 6. In the initial stage of the reaction, deuterium gas was never observed but, in the final stage thereof, a lot of bubbles were generated from the cathode. Oxygens was generated from the annode from the initial stage.

After finish of the reaction, the heavy water was sampled to measure an amount of tritium using a liquid scintillation counter. The time of measurement was two hours and the back ground of the scintillation counter was 44 dpm on an average.

Table 2 shows results of measurements of tritium before and after the electrolysis of the heavy water ($D_2O$) and Fig. 2 shows a time dependent characteristic of the amount of tritiums generated.

Table 2

| Sample | elaped time | amount of T($^3$H) dpm/g |
|---|---|---|
| $D_2O$ | 109 | 1534 |
| before electrolysis | hr | 1459 |
| $D_2O$ | 109 | 7414 |
| after electrolysis | hr | 7381 |
| | | 7393 |
| | 14 hr | 7315 |

The symbol (dpm/g) denotes a number of tritiums decayed per one gram of heavy water for one minute.

As is apparent from Table 2, the amount of tritiums in the heavy water is increased about five times as much as that before the reaction. This indicates that the nuclear fusion reaction was caused at a room temperature.

Further, neutrons were also measured using a $BF_3$ rem counter. The result was that about 500 neutrons of 2.45 MeV generated by the D-D reaction were observed per one hour. This amount was about ten times as much as the background.

[ Example 2 ]

In this example, an electrolyte of about 50 ml was prepared by resolving 0.1 N lithium metal (LiOD) and about 0.1 N $H_2SO_4$ into heavy water of purity 99.5 %. A wire-like $CePt_2$ cathode of diameter 2.0 mm and a plate-like Ni annode of thickness 0.3 mm were arranged in a beaker of 80 ml containing the above electrolyte. Pulses of a voltage from 20 to 50 V the width of which was about one second were applied between the cathode and the annode about 100 times to electrolyze the heavy water. Thereafter, the heavy water was sampled to measure an amount of tritiums by a liquid scintillation counter. Tritiums were increased ten times as much as the before the electrolysis. A measurement of neutrons using a $^6$Li glass scintillator indicated that the number of neutrons was also increased greatly.

[ Example 3 ]

In an apparatus similar to that employed in the Example 1 or 2, a cathode made of $ZrV_{0.5}N_{1.5}$ having Laves phase of C15 type was prepared and deuteron occluding reaction was done by supplying a direct current voltage of 20 V and a direct current of 100 mA for 500 hours. After the reaction, an amount of tritiums was measured using a liquid scintillation counter and the results were shown in Table 3. As is clear from Table 3, the probability of the nuclear fusion reaction was enhanced about ten times as much as that before the electrolysis.

Table 3

| Sample | elapsed time (Hr) | amount of tritium (dpm/g) |
|---|---|---|
| $D_2O$ | 500 | 1481 |
| before electrolysis | | |
| $D_2O$ | 250 | 13770 |
| after electrolysis | 500 | 14982 |

The reason why the probability of the nuclear fusion reaction is enhanced in the examples 1 to 3 is that the hydrogen isotoped occluding alloy material was used as the cathode.

Conventionally, Pd metal was usually used as the cathode for electrolyzing light or heavy water. Pd metal can occlude deuteriums till about three atomic % at a room temperature while maintaining an FFC (Face center cubic) crystal structure. At that time, the lattice constant a increases to 3.891 - 3.894 Å while maintaining solidified α phases. When deuteriums are further occluded, β phases having an FCC crystal structure are gradually formed and finally becomes $PdH_{0.6}$ and the lattice constant a increases to 4.018 Å.

The deuterium to metal atomic ratio H/M further increases at a lower temperature and for instance, it becomes 4 at the maximum at 4.2 K theoretically. However, as mentioned above, H/M is 0.6 at the maximum at a room temperature under the best conditions. This is fairly small when compared with the alloy material according to the present invention.

Further, Pd metal becomes impossible to maintain a role as an electrode since it is atomized by expansion of each lattice caused in a β phase forming range larger than 0.03.

Contrary to the above, the cathode according to the present invention can have H/M larger than 1.0 at a room temperature and, accordingly, the density of deuterium in each lattice becomes two times as much as that of Pd metal. Further, it is very active to deuteriums and has a high reaction velocity.

As is apparent from the above, the first reason why the nuclear fusion reaction can be realized at a room temperature easily is that the density of deuterium in the cathode can be increased greatly and the second reason is that the affinity of the alloy of the present invention to deuterium is high.

In the first preferred embodiment, Laves phase C14 or C15 type alloys are used as the cathode in the apparatus for electrolyzing heavy water.

However, these alloys can be advantageously used in the gas phase reaction.

For instance, deuterium gas was charged in a high pressure resistive reaction container of stainless steel to make an alloy material occlude hydrogen isotopes.

After 50 hours from the charging, neutrons were measured using a $BF_3$ rem counter upon discharging the deuterium gas. Burst of neutrons of thousand times as much as those in the normal case was observed for one minute.

[ Second Preferred Embodiment ]

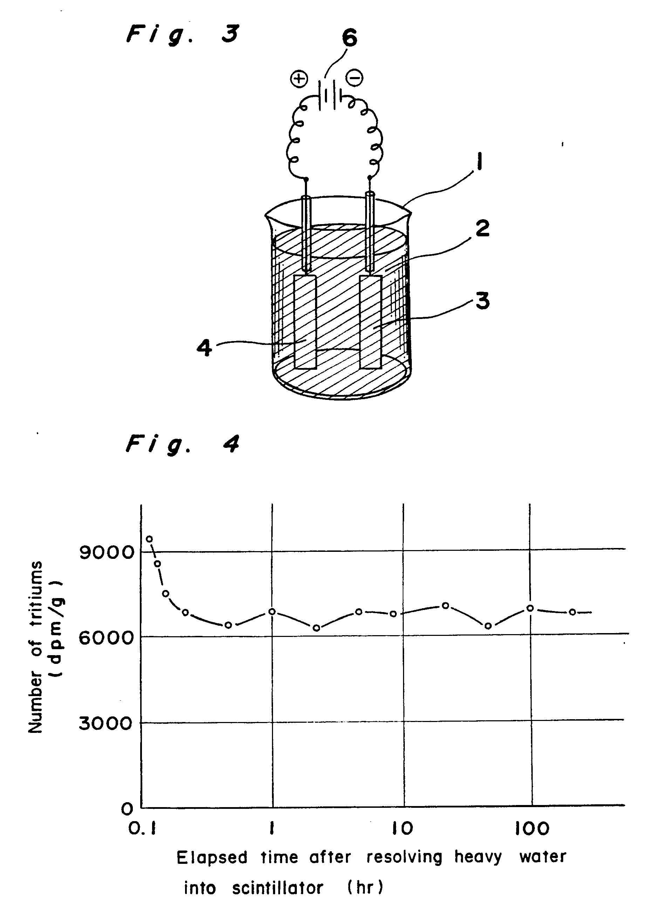

In the second preferred embodiment of the present invention, there is used an amorphous metal or alloy as a cathode in an apparatus for electrolyzing heavy water as shown in Fig. 3.

The cathode 3 was made of an amorphous metal or alloy as a main component which had not a crystal lattice rule of a long period.

As an annode 4, metal, metal oxide or metal hydroxide was desirable used and an electrolyte 2 was heavy water including alkali ions such as $Li^+$, $K^+$ and the like.

The cathode 3 was manufactured as follows.

At the first, raw materials such as Ti, Zr and the like were weighed so as to have a composition of a desirable amorphous alloy not having a crystal lattice rule of a long period and charged into a melting pot of quartz. The melting pot was put in a high-frequency induction heating furnace and the charged raw-materials were melted in an innert gas directly and the molten obtained was rapidly cooled using a single roll forming method. Alloy material thus obtained has a shape of strip, ribbon or plate. Part of the alloy material was used for analyzing properties thereof such as atomic composition, crystal structure, homogeneity and the like and the rest thereof was used for measuring hydrogen isotope occlusion-releasing characteristic of the alloy in the hydrogen isotope gas [mainly, P(pressure) - C(composition) - T-(temperature)] measurement and for evaluating electro-chemical properties.

Forming methods other than the single roll method such as depositing method, molten falling method or the like are also utilized for forming amorphous alloys according to the present invention.

The plate-like amorphous material can be used for the cathode directly. The cathode can be formed using powder solidifying method, powder sintering method, machining method, diecasting method or the like.

A variety of amorphous alloys desirable for the cathode are listed up in Table 4 corresponding to Table 1 of the first preferred embodiment.

## Table 4

| Composition | atomic ratio of deuterium to alloy (H/M) |
|---|---|
| $Ti_2Ni$ | 1.1 |
| $TiNi$ | 1.05 |
| $ZrNi_3$ | 1.8 |
| $ZrCu_2$ | 1.7 |
| $Zr_2Cu$ | 1.0 |
| $HfAl_{1.5}Pd_{0.5}$ | 1.1 |
| $HfNi_2$ | 1.2 |
| $PdCo_2$ | 1.1 |
| $La_{0.4}Ti_{0.6}Ni_2$ | 1.05 |
| $Zr_{0.8}Ag_{0.5}Cu_2$ | 1.1 |
| $Mg_{0.6}Ti_{0.4}Zn_2$ | 1.2 |
| $LaPt_2$ | 1.5 |
| $ZrV_{0.4}Ni_{1.6}$ | 1.3 |

Table 4 (Cont.)

| Composition | atomic ratio of deuterium to alloy (H/M) |
|---|---|
| $ZrV_{0.5}Ni_{1.5}$ | 1.4 |
| $ZrV_{0.7}Ni_{1.3}$ | 1.5 |
| $CeNi_2$ | 1.6 |
| $PrNi_{1.5}Nb_{0.5}$ | 1.2 |
| $MnPd_2$ | 1.3 |
| $Ti_{0.6}Nb_{0.4}Co_2$ | 1.1 |
| $Hf_{0.7}Nd_{0.3}Al_2$ | 1.05 |
| $TiCr_{1.7}$ | 1.6 |
| $TiCo_2$ | 1.2 |
| $Ti_{0.8}Al_{0.2}Co_2$ | 1.6 |
| $MgNi_{1.5}$ | 1.1 |
| $ZrNd_{0.5}Ca_2$ | 1.15 |
| $TiAl_{1.0}Y_{1.5}$ | 1.4 |
| $TiCr_{1.2}Ta_{0.3}$ | 1.4 |
| $ZrMo_2$ | 1.7 |
| $ZrPd_{0.5}Zu_{1.0}$ | 1.3 |
| $ZrNi_{0.8}Ag_{1.0}$ | 1.2 |
| $ZrMo_{1.2}Au_{0.8}$ | 1.4 |
| $ZrSm_{0.8}Mn_{1.7}$ | 1.4 |

As the result of analysis, alloys listed up in Table 4 were homogeneous and impurities and shifts of the component were hardly observed.

As is apparent from Table 4, amorphous alloys listed up have large H/M when compared with that of Pd metal or the like and properties such as the reaction speed thereof and the like were also excellent. Crumbling or powdering of the cathode was never observed. This phenomenon is the most favorable feature of the hydrogen isotope occluding amorphous alloy.

Alloys being comprised of one or more elements selected among Ti, Zr, Hf, Mg, La group elements and Pd as main component (more than 20 atom %) and one or more elements selected among Fe, V, Ni, Cr, Mn, Co, Cu, Zn, Al, Si, Nb, Mo, W, Mg, Ca, Y, Ta, Pd, Pt, Ag, Au, Cd, In, Bi, La, Ce, Pr, Nd, Tn, Sm, Mm (a mixture of rare earth metal elements) as residual part are especially advantageous since they can form homogeneous phases, can maintain their shapes without any crumbling and have especially large values of (H/M).

These properties of the amorphous alloys mentioned above are effective for promoting the nuclear fusion reaction and obtaining much energy.

[ Example 1 ]

Fig. 3 shows an apparatus for the cold nuclear fusion similar to that employed in the first preferred embodiment.

Heavy water 2 of purity 99.5 % into which about 0.1 N Lithium chloride and about 0.1 N iron chloride were resolved was filled in a beaker of 100 ml.

A strip(ribbon)-like $Ti_2Ni$ cathode 3 of a thickness 0.1 mm and a plate-like Pt annode 4 of a thickness 0.3 mm were immersed therein so as to opposite to each other.

The heavy water 2 was electrolyzed for about 240 hours by applying a voltage of 20 to 30 V and a current of 10 to 500 mA from a direct current power source 6. In the initial stage of the electrolysis, no deuterium gas was generated from the cathode 3 but, in the final stage, many bubbles were observed. Crumbling and powdering of the cathode were never observed and an occluding reaction was progressed smoothly. Oxygen was generated from the annode 4 from the initial stage thereof.

After the reaction, the heavy water was sampled to measure an amount of tritiums using a liquid scintillation counter.

The measuring time was two hours and the background of the counter was 44 dpm on an average.

Table 5 shows results of the measurement of the amount of tritiums in the heavy water and Fig. 4 shows a time dependent characteristic of the amount of tritiums.

Table 5

| Material | Elapsed time T($^3$H) | Amount dpm/g |
|---|---|---|
| $D_2O$ | 100 | 1530 |
| before electrolysis | hr | 1450 |
| $D_2O$ | 100 | 6814 |
| after electrolysis | hr | 7120 |
|  | 14 | 7049 |
|  | hr | 6931 |

As is apparent from Table 5, the amount of tritiums is increased up to about 4.5 times as much as that before the electrolysis and this suggests that the nuclear fusion reactions were caused at a room temperature.

[ Example 2 ]

An apparatus similar to the apparatus employed in the Example 1 of the second preferred embodiment was used.

As electrolyte, there was used heavy water of purity 99.5 % into which about 0.1 N Li metal (LiOD) and about 0.1 N $H_2SO_4$ were resolved. The heavy water was filled into a beaker of 50 ml. A spherical cathode made of $ZiV_{0.5}Ni_{1.5}$ amorphous alloy was prepared and immersed therein. An annode of spherical shell shape made of Ni was prepared so as to enclose the sphere cathode therein by deforming an Ni plate of a thickness 0.3 mm. Pulses of 20 to 50 V having a width of one second were applied about 100 times

10

between the cathode and annode to electrolyze the heavy water. The spherical cathode was prepared by grinding flake-like amorphous alloy, forming a sphere using a mixture of the powder of the amorphous alloy and a binder, pressing the sphere and dewaxing the binder therein at 200 °C in an innert gas.

After the electrolysis, the heavy water was sampled to measure an amount of tritiums therein using a liquid scintillation counter. According to the result of the measurement, the amount of tritiums in the heavy water increased ten times as much as that before the electrolysis as shown in Table 6.

Table 6

| Material | elapsing time (hr) | amount of Tritium (dpm/g) |
|---|---|---|
| $D_2O$ | 100 | 1492 |
| before electrolysis | | |
| $D_2O$ | 50 | 14437 |
| after electrolysis | 100 | 15233 |

Further, according to results of the measurement of neutron using a $^6$Li glass scintillation counter, the number of neutrons was greatly increased.

As is apparent from these examples, amorphous alloys used as the cathode have values of (H/M) larger than 1.0 and this indicates that they can occlude hydrogen isotopes in a high density therein. This enables to cause the nuclear fusion reaction at a room temperature. This feature is enhanced by excellent affinities of the amorphous alloys to deuterium.

[ Third Preferred Embodiment ]

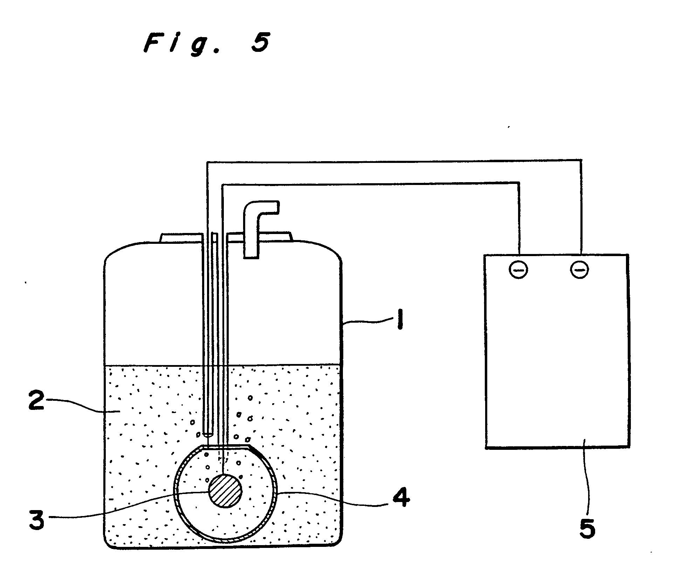

In the third preferred embodiment, an apparatus for electrolyzing heavy water as shown in Fig. 5 was prepared.

In a reaction container 1, heavy water (LiOD) 2 including alkali ions such as $Li^+$, $K^+$ and the like was contained. A spherical cathode 3 made of a metal such as Pd, Ti or an alloy selected among alloys listed up in Table 1 or 4 was prepared so as to have a diameter of 7 mm. An annode of spherical shell shape having a cut portion was prepared by forming Pt plate of a thickness 0.5 mm so as to have a diameter of 20 mm.

The cut portion was formed to have a diameter of 7 mm. These cathode 3 and annode 4 were immersed in the heavy water and the cathode 3 was arranged at the center of the annode 4. These electrodes 3 and 4 were connected, via lead lines made of acid resistive metal such as Pt, to terminals of a direct current power source 5, respectively.

By forming the cathode spherically, it becomes possible to enlarge an active site of the surface thereof and to enhance the probability of collision between deuterons at the center thereof. Accordingly, the nuclear fusion reaction was caused easily and an enormous energy was obtained.

[ Example 1 ]

In the reaction container 1 of 100 ml, heavy water 2 of purity 99.5 % into which about 0.1 N LiOD was resolved was filled and was electrolyzed by supplying a constant current of 10 mA/cm² (voltage 2 - 30 V) between the cathode 3 and annode 4 for about 360 hours. In the initial stage of the electrolysis, no deuterium gas was generated from the cathode but many bubbles were generated in the final stage thereof. From the annode 4, oxygen was generated from the initial stage.

An amount of neutrons generated in the reaction was measured using a liquid scintillation counter (NE-213). In the measurement, neutrons and γ - rays were classified due to energies and light emission times and the neutrons classified were compared with natural neutrons (back ground).

The background by natural neutrons was 0.7 cps on an average and the neutrons generated during the electrolysis of the heavy water was 1.8 to 9.2 cps which were two to ten times as much as that of the natural neutron.

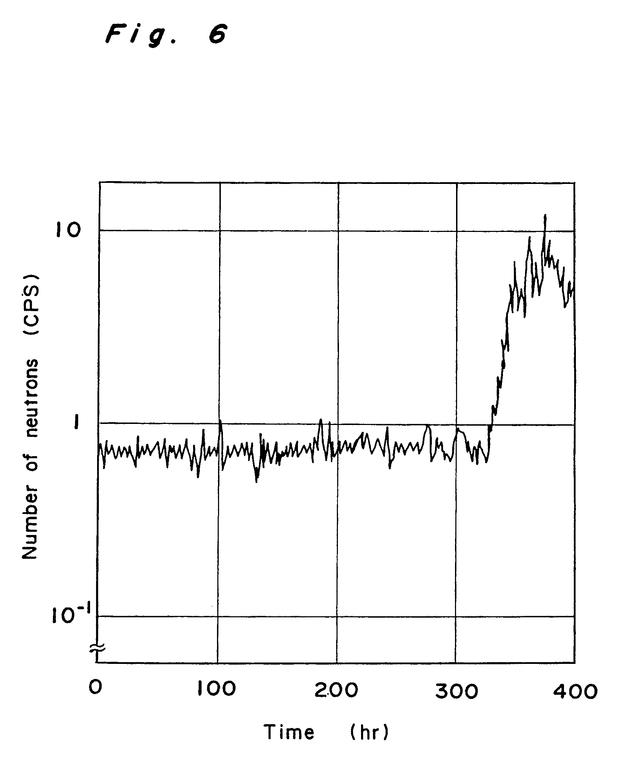

Fig. 6 shows a time dependency of the amount of neutrons generated. The generation of neutron was increased when 336 hours was elapsed and kept at a constant level. This indicates that the nuclear fusion reaction was caused at a room temperature.

At the same time, neutrons were observed using a $BF_3$ rem counter. Generation of neutrons of 2.45 MeV by the D-D reaction was observed together with the liquid scintillation.

The constant current method was used in the Example 1, however, the pulse current method or alternating current method can be used for the electrolysis.

[ Example 2 ]

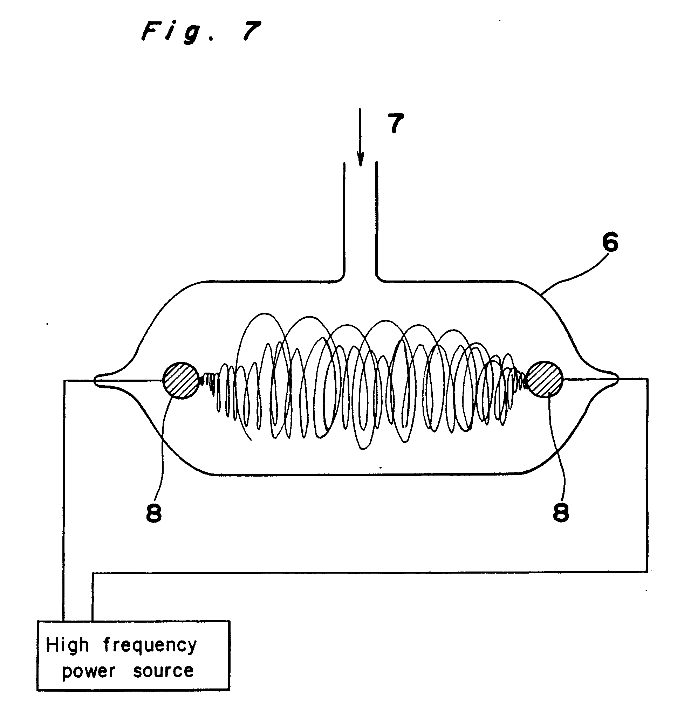

Fig. 7 shows an apparatus for a gas phase reaction.

In the apparatus, there was used a quartz-glass tube 6 as a reaction container. Deuterium gas 7 of purity 99.9 % was charged therein and two spherical electrodes 8 and 8 made of a hydrogen isotope occluding metal or alloy were arranged oppositely in an axial direction thereof. Two electrodes were connected to a high frequency power source.

Discharge was caused by supplying a power of 400 W between the two electrodes and an amount of neutrons generated was measured using a liquid scintillation counter. The amount of neutrons generated during the discharge was increased about 1,000 times as much as the background. And, at the same time, $\gamma$ rays were observed. When pure hydrogen gas of purity 99.99% was charged, the amount of neutrons generated was almost equal to the background.

[ Example 3 ]

In the example, there was used a tube made of SUS and a spherical electrode made of a hydrogen occluding metal or alloy was put therein. The tube was evacuated at about 600 $^\circ$C and, then, deuterium gas was charged thereinto.

Heat cycle between the temperature of liquid nitrogen and a room temperature was repeated to enable occlusion-release of deuteriums in the spherical electrode. During the heat cycle, neutrons 10 - 1000 times as much as the background were observed.

It is to be noted that the number of spherical electrodes is not limited to two. For instance, either one of them can be a spherical electrode and three or more spherical electrodes can be used.

[ Example 4 ]

An apparatus similar to that of the Example 3 was used in the Example 4.

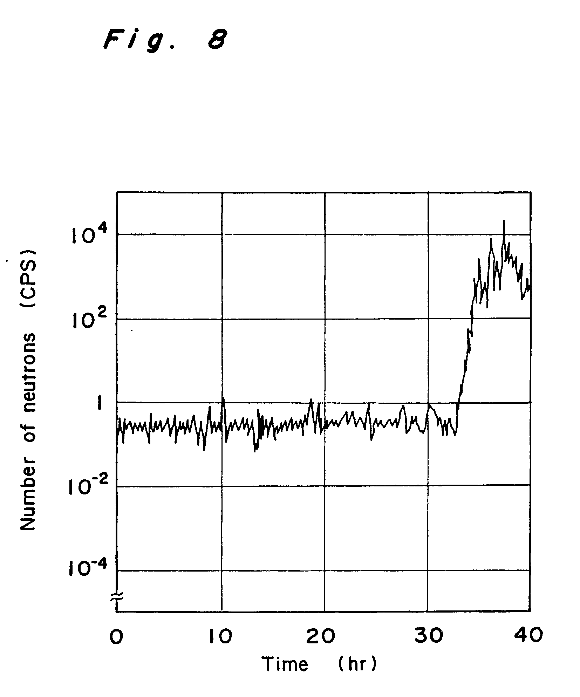

In the tube of SUS, a ball of a diameter 10 mm made of $ZrV_{0.5}Ni_{1.5}$ of Laves phase C15 type was put. After evacuating the tube to about $10^{-6}$ mmHg at about 600 $^\circ$C, deuterium gas was charged therein at a pressure of 10 atm. After about 35 hours, neutrons about 4,000 times as much as the background were observed which might be caused due to the occlusion and release of deuteriums. Fig. 8 shows the result of measurement in this example.

It is understood that various other modifications will be apparent to and can be readily made by those skilled in the art without departing from the scope and spirit of the present invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which the present invention pertains.

**Claims**

1. An apparatus for causing nuclear fusion reactions at a low temperature comprising cathode means made of an alloy of Laves phase C14 type or C15 type as a main component,

annode means made of a material selected from a group including metals, metal oxides and metal hydroxides as a main component,

electrolyte means including hydrogen isotopes and

container means for containing electrolyte means therein

wherein said electrolyte means is electro-chemically decomposed by applying an electric power between said cathode and annode immersed in said electrolyte means to make said cathode absorb or occlude ionized hydrogen isotopes and

nuclear fusion reactions are caused by reactions between or among said ionized hydrogen isotopes.

2. The apparatus as claimed in Claim 1 in which said electrolyte means is heavy water.

3. The apparatus as claimed in Claim 2 in which said electric power is a current applied as pulses.

4. An electrode for use in an apparatus for causing nuclear fusion reactions at a low temperature being characterized in that said electrode is made of an alloy being capable of occluding hydrogen isotopes.

5. The electrode as claimed in Claim 4 in which said alloy is an alloy of Laves phase C14 type.

6. The electrode as claimed in Claim 4 in which said alloy is an alloy of Laves phase C15 type.

7. The electrode as claimed in Claim 4 in which said alloy is a mixture of an alloy of Laves phase C14 type and an alloy of Laves phase C15 type.

8. The electrode as claimed in either one of Claims 5 to 7 in which

said Laves phase alloy is represented by a general equation $AB\alpha$ (A and B are elements different from each other) wherein

A indicates at least one element selected from a group of Zr, Ti, Hf, Ta, Y, Ca, Mg, La, Co, Pr, Mm, Nb, Nd, Mo, Al and Si (Mm indicates a mixture of rare earth elements), B indicates at least one element selected from a group of Fe, V, Ni, Cr, Mn, Co, Cu, Zn, Al, Si, Nb, Mo, W, Mg, Ca, Y, Ta, Pd, Pt, Ag, Au, Cd, In, Bi, La, Co, Pr, Nd, Ta, Sm and Mm, and $\alpha$ is a value of 1.5 to 2.5.

9. The electrode as claimed in Claim 5 in which said Laves phase C14 type alloy has a crystal structure of hexagonal symmetry and crystal lattice constants thereof a and c are of 4.8 to 5.2 Å and 7.9 to 8.3 Å, respectively.

10. The electrode as claimed in Claim 6 in which said Laves phase C15 type alloy has a crystal structure of cubic symmetry and the crystal lattice constant a is of 6.92 to 7.70 Å.

11. The electrode for use in an apparatus for causing nuclear fusion reactions at a low temperature being characterized in that said electrode is formed as a sphere.

12. An electrode for use in an apparatus for causing nuclear fusion reactions at a low temperature being characterized in that

said electrode is made of an amorphous metal or alloy not having a crystal lattice rule of long period as a main component.

13. The electrode as claimed in Claim 12 in which said amorphous metal or alloy includes at least one element selected from a group of Ti, Zr, Hf, Mg, La family elements and Pd as a main component larger than 20 atom %.

14. The electrode as claimed in Claim 12 or 13 in which said electrode is formed as a thin ribbon or plate.

15. The electrode as claimed in Claim 12 or 13 in which said electrode is formed as a sphere.

*F i g .   1*

*F i g .   2*

Elapsed time after resolving heavy water
into  scintillator  (hr)

Fig. 3

Fig. 4

Elapsed time after resolving heavy water
into scintillator (hr)

Fig. 5

# Fig. 6

Fig. 7

High frequency
power source

Fig. 8